# DEMANDE DE BREVET EUROPEEN

(11) **EP 2 149 787 A1**
(43) Date de publication de la demande: **03.02.2010**
(21) Numéro de dépôt: 09166758.4
(22) Date de dépôt: 29.07.2009
(51) Int. Cl.: G01N 21/88, G01N 21/95

(54) **Système d'aide au contrôle non destructif d'une structure telle que notamment d'un navire**

(30) Priorité: 31.07.2008 FR 0855276
(71) Demandeur: DCNS, 75015 Paris (FR)
(72) Inventeur: Myx, Olivier, 83200, TOULON (FR)
(74) Mandataire: Blot, Philippe Robert Emile

(57) **Abrégé**

Il est décrit un système d'aide au contrôle non destructif d'une structure telle que notamment d'un navire qui comporte :
- des moyens (7) de prise de plusieurs vues différentes de zones à contrôler de la structure, associés à des moyens d'acquisition de données de localisation et d'orientation de ces moyens lors de la prise des vues,
- des moyens (8) de reconstruction de représentations en trois dimensions de ces zones à partir des prises de vues et des données de localisation et d'orientation,
- des moyens (9) de caractérisation des défauts éventuels de ces zones, et
- des moyens (10) de stockage de ces différentes informations dans une base de données accessible pour une expertise (12) des éventuels défauts et pour guider (14) les contrôles ultérieurs de la structure.
Les moyens d'acquisition de données de localisation et d'orientation comprennent des moyens de repérage en x, y, z dans un système de coordonnées prédéterminé et des moyens d'acquisition d'informations de lacet, de tangage et de roulis des moyens de prise de vues.

## Description

La présente invention concerne un système d'aide au contrôle non destructif d'une structure telle que notamment d'un navire.

La connaissance de l'état d'une structure et en particulier celle d'un navire ainsi que sa gestion, sont fondamentales pour le métier de la sécurité et la réparation navales en particulier.

Les opérations d'inspection ou de contrôle ont donc pour objectif, outre la détection proprement dite des défauts et fissures de la structure, leur caractérisation en dimension, c'est-à-dire en étendue et en profondeur, ainsi que leur localisation sur la structure inspectée.

Les procédures habituelles d'inspection des structures en particulier des navires reposent sur un contrôle visuel de celles-ci. Elles consistent alors à envoyer des contrôleurs qualifiés à bord, qui sont chargés de constater les défauts et de relever leurs caractéristiques. Ces informations sont relevées manuellement par les contrôleurs puis sont transmises à un expert pour une analyse à posteriori.

On conçoit cependant que cette façon de procéder présente plusieurs inconvénients et risques majeurs.

En effet, il y a des risques d'erreurs et de mélanges lors de la reprise des relevés effectués à bord, de même que des difficultés de repérage fiable des relevés et de positionnement des clichés dans la structure du navire, les membrures inspectées étant par nature toutes semblables.

Par ailleurs, la caractérisation des défauts est relativement subjective dans la mesure où elle est basée sur l'interprétation visuelle de différents opérateurs humains.

Enfin, le temps de traitement est relativement important pour établir un relevé d'inspection consolidé.

Le but de l'invention est donc de résoudre ces problèmes en proposant un système d'aide à ce type de contrôles visuels, permettant d'assurer la rigueur de ces inspections tout en proposant des acquisitions de données fiables, propres à être partagées, télétransmises, exploitées et archivées tant pour contrôler les évolutions des structures des navires entre deux inspections, que pour en relever les problèmes et conserver des éléments de preuve de la même manière qu'un cliché radiographique.

A cet effet, l'invention à pour objet un système d'aide au contrôle non destructif d'une structure telle que notamment d'un navire, **caractérisé en ce qu**'il comporte :
- des moyens de prise de plusieurs vues différentes de zones à contrôler de la structure, associés à des moyens d'acquisition de données de localisation et d'orientation de ces moyens lors de la prise des vues, comprenant des moyens de repérage en x, y, z de ces moyens dans un système de coordonnées prédéterminé et des moyens d'acquisition d'informations de lacet, de tangage et de roulis des moyens de prise de vues au moment du déclenchement de celles-ci,
- des moyens de reconstruction de représentations en trois dimensions de ces zones à partir des prises de vues et des données de localisation et d'orientation,
- des moyens de caractérisation des défauts éventuels de ces zones, et
- des moyens de stockage de ces différentes informations dans une base de données accessible pour une expertise des éventuels défauts et pour guider les contrôles ultérieurs de la structure.

Selon d'autres aspects de l'invention, le système d'aide au contrôle non destructif d'une structure telle que notamment d'un navire comprend l'une ou plusieurs des caractéristiques suivantes :
- les moyens de prise de vues comprennent un appareil photographique numérique,
- les moyens de prise de vues comprennent une caméra numérique,
- les moyens de reconstruction en trois dimensions des défauts comprennent des moyens de corrélation des différentes prises de vues des défauts et des données de localisation et d'orientation des moyens de prise de vues lors de prise de vues de ceux-ci pour reconstruire les représentations en trois dimensions,
- les moyens de caractérisation des éventuels défauts comprennent des moyens d'établissement du type de défauts et de leurs caractéristiques en étendue et profondeur,
- les moyens de stockage des informations dans une base de données comprennent des moyens de création de fichiers de données transmissibles par des réseaux de transmission d'informations,
- les moyens de stockage de données sont raccordés à des moyens de calcul de structure pour évaluer l'importance des éventuels défauts sur l'intégrité de la structure elle-même, et
- les moyens de stockage des informations sont également raccordés à des moyens d'établissement de gammes de contrôles ultérieurs de la structure et en particulier des défauts de celle-ci.

L'invention sera mieux comprise à l'aide de la description qui va suivre, donnée uniquement à titre d'exemple et faite en se référant aux dessins annexés, sur lesquels :
- la figure 1 illustre des moyens de prise de vues entrant dans la constitution d'un système d'aide selon l'invention, et
- la figure 2 illustre des moyens de traitement mis en oeuvre dans un système d'aide selon l'invention.

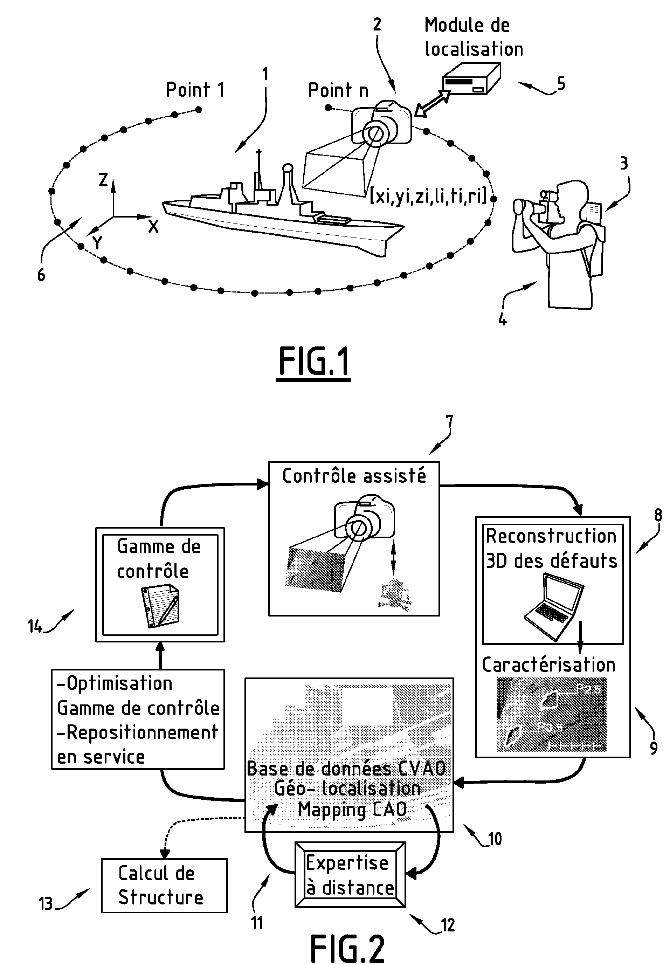

On a en effet illustré sur la figure 1, une partie d'un système d'aide au contrôle non destructif d'une structure telle que notamment d'un navire, selon l'invention.

Cette structure et ce navire sont désignés par la référence générale 1 sur cette figure et se présentent par exemple sous la forme d'un navire armé de surface.

Bien entendu, le système selon l'invention trouve des applications pour d'autres types de structures telles que notamment des ouvrages d'art, des structures off shore, etc.....

En fait, dans le système d'aide au contrôle non destructif selon l'invention, on utilise des moyens de prise de plusieurs vues différentes de zones à contrôler de la structure, associés à des moyens d'acquisition de données de localisation et d'orientation de ces moyens lors de la prise des vues.

Ces moyens sont par exemple désignés par la référence générale 2 ou 3 sur cette figure et se présentent par exemple sous la forme d'un appareil photographique numérique 2 ou encore une caméra numérique 3, porté par un utilisateur par exemple 4 et associés à des moyens de localisation désignés par la référence générale 5, dans un repère déterminé désigné par la référence générale 6, et à des moyens permettant d'acquérir des informations de localisation et d'orientation des moyens de prise vues lors des prises de vues pour acquérir par exemple des informations de localisation en x, y et z dans le repère 6 et de lacet, de tangage et de roulis de ceux-ci lors des prises de vues. Ces moyens sont par exemple basés sur l'utilisation de gyroscopes ou autres.

L'opérateur est alors amené à réaliser plusieurs clichés de la structure, par exemple en tournant ou en se déplaçant de façon appropriée, autour de ou dans celle-ci comme cela est illustré, en différents points, entre un premier point appelé point 1, point d'origine, sur cette figure et un dernier point appelé point n sur cette figure.

On conçoit alors que l'on dispose de plusieurs vues différentes des zones à contrôler associées à des données de localisation et d'orientation des moyens de prise de vues lors de celles-ci.

La multiplicité des prises de vue a donc un double but :
1. Positionner la zone contrôlée dans la structure ; et
2.Recouper les défauts dans cette zone pour les caractériser (la vision sous différents angles permettant d'alimenter un algorithme de traitement)

Ces différents moyens sont désignés par la référence générale 7 sur la figure 2 et délivrent alors des métadatas de donnés qui permettent de reconstruire des représentations en trois dimensions de ces zones, par l'intermédiaire de moyens de traitement et de calcul correspondants désignés par la référence générale 8 sur cette figure 2.

En effet, ces moyens de calcul 8 sont adaptés pour reconstruire des représentations en trois dimensions des zones à contrôler et en particulier des défauts relevés, par corrélation à partir des données de prise de vues et des données de localisation et d'orientation des moyens correspondants.

Une fois ces représentations en trois dimensions obtenues, celles-ci sont ensuite analysées et expertisées pour caractériser par exemple en étendue et en profondeur, les défauts éventuels de ces zones, comme cela est illustré par les moyens désignés par la référence générale 9 sur cette figure.

Ceci est par exemple réalisé automatiquement par des algorithmes de traitement d'images de type classique, cette opération étant complétée ou non par une expertise humaine.

Ces différentes informations sont ensuite transmises à des moyens de stockage fonctionnant à la manière d'une base de données désignée par la référence générale 10 sur cette figure, cette base de données étant accessible pour une expertise des éventuels défauts et pour guider les contrôles ultérieurs de la structure.

En effet, ces moyens sont par exemple formés par des moyens de création de fichiers de données transmissibles par des réseaux de transmission d'informations comme par exemple celui désigné par la référence générale 11, permettant d'accéder à celles-ci à travers des moyens formant interface distants désignés par la référence générale 12 et permettant donc une expertise à distance.

Ces fichiers peuvent également être transmis à des moyens de calcul de structure de type classique et désignés par la référence générale 13, pour évaluer l'importance des éventuels défauts sur l'intégrité de la structure elle-même.

Enfin, ces moyens de stockage des informations sont également raccordés à des moyens d'établissement de gammes de contrôles ultérieurs de la structure et en particulier des défauts relevés de celle-ci pour optimiser la gamme de contrôle, comme cela est désigné par la référence générale 14 sur cette figure 2.

On notera que les moyens de reconstruction en trois dimensions des défauts peuvent comporter des moyens de corrélation des différentes prises de vues des défauts et des données de localisation et d'orientation des moyens de prises de vues lors des prises de vues de ceux-ci, pour reconstruire de façon classique, par traitement numérique, les représentations en trois dimensions de ces défauts.

Ceci permet alors grâce aux moyens de caractérisation des éventuels défauts, d'établir le type des défauts et leurs caractéristiques en étendue et en profondeur, comme cela est habituel.

On conçoit alors qu'un tel système est une réponse efficace aux problèmes de connaissance et de gestion de l'état des structures notamment des navires en automatisant et en fiabilisant le processus du contrôle visuel mis en oeuvre lors des inspections des navires et notamment lors des entretiens majeurs par exemple.

A cet effet, le système établit une cartographie de contrôle de l'état de la structure d'un navire d'après les résultats des inspections en exploitant les images acquises.

La génération des images en trois dimensions des défauts permet de les caractériser, ce qui permet aux experts amenés à intervenir, d'avoir à disposition des éléments de substitution au contrôle visuel pour appréhender la nature des défauts et structurer leur analyse.

Ceci permet, par ailleurs, d'assurer la gestion et le suivi de l'état des structures d'un navire et de préparer et de contrôler les inspections ultérieures.

En fin de compte, la qualité et la productivité des inspections sont améliorées.

Un tel système pourrait alors servir de base à la définition d'une norme de contrôle (de type COFREND).

Bien entendu, différents modes de réalisation encore peuvent être envisagés.

## Revendications

1. Système d'aide au contrôle non destructif d'une structure telle que notamment d'un navire (1), **caractérisé en ce qu'**il comporte :
- des moyens (7) de prise de plusieurs vues différentes de zones à contrôler de la structure, associés à des moyens (5) d'acquisition de données de localisation et d'orientation de ces moyens (7) lors de la prise des vues, comprenant des moyens de repérage en x, y, z de ces moyens dans un système (6) de coordonnées prédéterminé et des moyens d'acquisition d'informations de lacet, de tangage et de roulis des moyens (7) de prise de vues au moment du déclenchement de celles-ci,
- des moyens (8) de reconstruction de représentations en trois dimensions de ces zones à partir des prises de vues et des données de localisation et d'orientation,
- des moyens (9) de caractérisation des défauts éventuels de ces zones, et
- des moyens (10) de stockage de ces différentes informations dans une base de données accessible pour une expertise (12) des éventuels défauts et pour guider (14) les contrôles ultérieurs de la structure.

2. Système d'aide au contrôle non destructif d'une structure selon la revendication 1, **caractérisé en ce que** les moyens de prise de vues comprennent un appareil photographique numérique (2).

3. Système d'aide au contrôle non destructif d'une structure selon la revendication 1, **caractérisé en ce que** les moyens de prise de vues comprennent une caméra numérique (3).

4. Système d'aide au contrôle non destructif de structure selon l'une quelconque des revendications précédentes, **caractérisé en ce que** les moyens (8) de reconstruction en trois dimensions des défauts comprennent des moyens de corrélation des différentes prise de vues des défauts et des données de localisation et d'orientation des moyens (7) de prise de vues lors de prise de vues de ceux-ci pour reconstruire les représentations en trois dimensions.

5. Système d'aide au contrôle non destructif d'une structure selon l'une quelconque des revendications précédentes, **caractérisé en ce que** les moyens (9) de caractérisation des éventuels défauts comprennent des moyens d'établissement du type de défauts et de leurs caractéristiques en étendue et profondeur.

6. Système d'aide au contrôle non destructif de structure selon l'une quelconque des revendications précédentes, **caractérisé en ce que** les moyens (10) de stockage des informations dans une base de données comprennent des moyens de création de fichiers de données transmissibles par des réseaux de transmission d'informations (11).

7. Système d'aide au contrôle non destructif de structure selon l'une quelconque des revendications précédentes, **caractérisé en ce que** les moyens (10) de stockage de données sont raccordés à des moyens (13) de calcul de structure pour évaluer l'importance des éventuels défauts sur l'intégrité de la structure elle-même.

8. Système d'aide au contrôle non destructif de structure selon l'une quelconque des revendications précédentes, **caractérisé en ce que** les moyens (10) de stockage des informations sont également raccordés à des moyens (14) d'établissement de gammes de contrôles ultérieurs de la structure et en particulier des défauts de celle-ci.
